**Europäisches Patentamt**

**European Patent Office**

**Office européen des brevets**

(19)

(11) Numéro de publication : **0 486 377 A1**

# (12) DEMANDE DE BREVET EUROPEEN

(21) Numéro de dépôt : **91403022.6**

(22) Date de dépôt : **08.11.91**

(51) Int. Cl.⁵ : **A01K 11/00, G09F 3/12**

(30) Priorité : **12.11.90 FR 9013990**

(43) Date de publication de la demande :
**20.05.92 Bulletin 92/21**

(84) Etats contractants désignés :
**AT BE CH DE DK ES FR GB GR IT LI LU NL SE**

(71) Demandeur : **Alliaume, Pierre Marie Frédéric**
**44, rue de Balleroy**
**Le Molay Littry (Calvados) (FR)**

(72) Inventeur : **Alliaume, Pierre Marie Frédéric**
**44, rue de Balleroy**
**Le Molay Littry (Calvados) (FR)**

(74) Mandataire : **Cabinet Pierre HERRBURGER**
**115, Boulevard Haussmann**
**F-75008 Paris (FR)**

(54) **Etiquette d'identification d'un animal notamment d'un bovin.**

(57)    Etiquette d'identification caractérisée par :
une partie principale (30) munie d'un microprocesseur (36) pour l'enregistrement et la lecture
d'informations concernant l'animal et d'un premier organe de fixation (32),
une partie auxiliaire (31) munie d'un second
organe de fixation (33) destiné à être relié au
premier organe de fixation (32) de la partie
principale (30) par une liaison lors de la mise en
place de la partie principale (30) et de la partie
auxiliaire (31) sur l'animal,
la réunion des deux organes de fixation (32, 33)
mettant en oeuvre le microprocesseur (36) et
toute nouvelle ouverture ou tentative de rupture
de cette liaison provoquant l'inscription d'une
information non effaçable dans le microprocesseur (36).

FIG. 3

EP 0 486 377 A1

Jouve, 18, rue Saint-Denis, 75001 PARIS

La présente invention concerne une étiquette d'identification d'un animal utilisée comme moyen d'identification infalsifiable et de support actif d'informations, cette étiquette étant formée de deux parties fixées l'une à l'autre par des organes de fixation respectifs, ces deux parties enserrant entre elles, au moment de la mise en place sur l'animal, une partie de cet animal (oreille ou cou).

On connaît différents types d'étiquettes servant à identifier les animaux à des fins de contrôle interne à l'élevage ou pour les services vétérinaires.

Différents exemples de telles étiquettes sont donnés dans les documents suivants FR 2 393 372, EP 219 186, EP 12 597, EP 297 688, EP 242 906, EP 135 220.

Ainsi, on connaît déjà une étiquette du type ci-dessus pour identifier des animaux notamment des bovins. L'étiquette portant le numéro d'identité du bovin permet de suivre celui-ci et doit éviter des fraudes du suivi du cheptel par des services vétérinaires (primes d'abattage, etc...).

Or, il s'est avéré que ces étiquettes d'identification dites infalsifiables puisque constituées de deux parties serties l'une dans l'autre de part et d'autre d'une oreille du bovin peuvent néanmoins s'ouvrir ou être coupées et être fixées sur un autre animal. Cette possibilité de falsification de l'étiquette, c'est-à-dire de transfert de l'étiquette d'un animal à un autre, ouvre la porte à de multiples falsifications de l'identité des animaux.

La présente invention a pour but de remédier à ces inconvénients et se propose de créer une étiquette infalsifiable permettant non seulement d'identifier l'animal en recevant un numéro d'identification mais également de recevoir certaines informations concernant l'animal, informations qui sont de préférence lues à une certaine distance, par exemple lors du passage de l'animal entre deux barrières dans un poste de lecture ou devant un lecteur manuel portable.

A cet effet, l'invention concerne une étiquette d'identification d'un animal, du type ci-dessus, caractérisée par :
   – une partie principale munie d'un microprocesseur pour l'enregistrement et la lecture d'informations concernant l'animal et d'un premier organe de fixation,
   – une partie auxiliaire munie d'un second organe de fixation destiné à être relié au premier organe de fixation de la partie principale par une liaison lors de la mise en place de la partie principale et de la partie auxiliaire sur l'animal,
   – la réunion des deux organes de fixation mettant en oeuvre le microprocesseur et toute nouvelle ouverture ou tentative de rupture de cette liaison provoquant l'inscription d'une information non effaçable dans le microprocesseur.

Cette étiquette d'identification qui peut porter des informations écrites de manière lisible telles qu'un numéro d'identification ainsi que des informations en code barre comporte à titre d'élément principal et déterminant, les mêmes informations d'identification inscrites de manière codée dans le microprocesseur. Ces informations peuvent être lues de l'extérieur pour être décodées et interprétées. Ce codage et l'inscription des informations dans un microprocesseur assurent une protection très sérieuse contre toute tentative de falsification, d'autant plus que l'ouverture de la liaison entre les organes de fixation de la partie principale et de la partie auxiliaire de l'étiquette provoque l'inscription d'une information non effaçable dans la mémoire du microprocesseur. Cela permet de connaître toute tentative réussie ou non de falsification par ouverture de l'étiquette et transplantation de celle-ci sur un autre animal ; cela permet également, le cas échéant, d'inscrire dans le microprocesseur la date de cette tentative pour avoir une information encore plus précise.

Comme l'information inscrite dans le microprocesseur est codée de manière non effaçable, toute tentative extérieure pour décrypter cette information et la modifier est impossible. Cela constitue une sécurité supplémentaire pour l'étiquette d'identification infalsifiable selon l'invention.

Selon un mode de réalisation avantageux, les organes de fixation sont réunis l'un à l'autre par emboîtement et sertissage. L'un des organes de fixation est en forme de pièce femelle, l'autre en forme de pièce mâle ; la mise en place de ces deux organes de fixation l'un dans l'autre à travers par exemple l'oreille d'un animal, un morceau de peau de celui-ci ou sous la forme d'un collier autour du cou, constitue une solution très simple pour la mise en place de l'installation sans que cette simplicité ne soit au détriment de la sécurité.

Suivant une autre caractéristique intéressante de l'invention, le moyen de liaison réalise un contact électrique au moment de la réunion des organes de fixation. L'un des organes de fixation peut être constitué par un élément métallique, au moins en partie, qui lors de son introduction dans l'autre organe de fixation établit le contact et ferme le circuit électrique de cet autre organe de fixation. Selon une autre variante, le moyen de liaison réalise seulement la fermeture d'un circuit électrique par exemple avec un interrupteur à effet hall prévu dans le circuit du microprocesseur et l'organe de fixation opposé comportant un élément déclenchant l'interrupteur à effet hall.

Enfin, pour permettre l'introduction de données dans le microprocesseur ou la lecture de celles-ci, il est intéressant que le microprocesseur soit relié à un élément périphérique constitué par un émetteur-récepteur. Cela permettra de lire les informations contenues dans le microprocesseur même à une certaine distance, par exemple lorsque les animaux sont en troupeaux ou qu'ils passent dans des couloirs du poste de lecture.

La présente invention sera décrite ci-après de manière plus détaillée à l'aide des dessins annexés dans lesquels :

   – la figure 1 montre très schématiquement l'implantation d'une étiquette sur l'oreille d'un bovin.

   – la figure 2 est un schéma de principe d'une installation selon l'invention.

   – la figure 3 est une vue en coupe d'un premier mode de réalisation d'une partie principale et d'une partie auxiliaire d'une étiquette.

   – les figures 4 et 5 sont des vues de face de la partie auxiliaire et de la partie principale de l'étiquette d'identification selon l'invention.

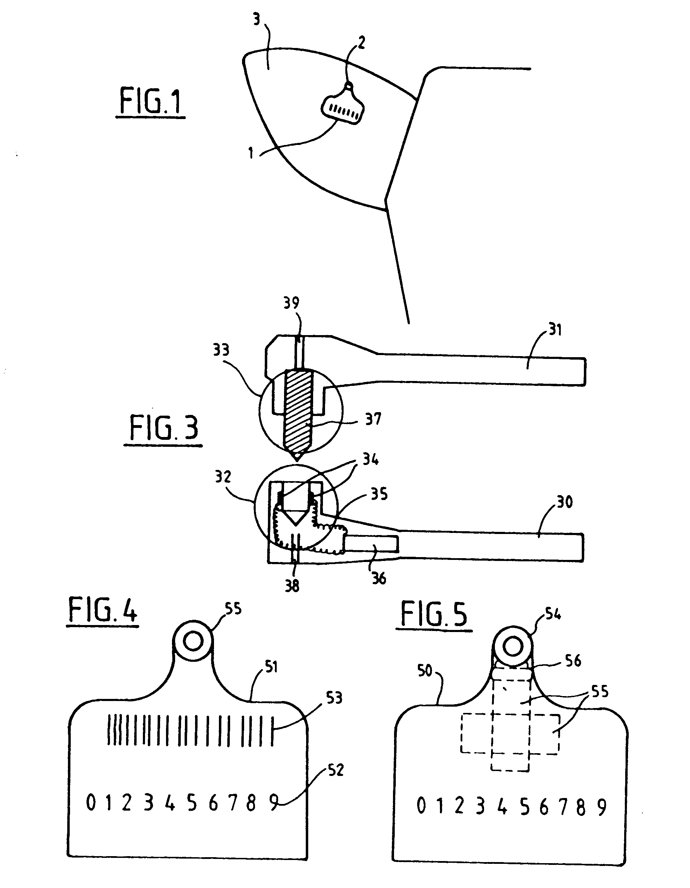

Selon la figure 1, à titre d'exemple, une étiquette d'identification 1 se fixe par l'intermédiaire d'un point de sertissage 2 sur l'oreille 3 d'un ovin. Cette étiquette 1 est théoriquement infalsifiable, c'est-à-dire qu'elle ne peut être enlevée de l'oreille de l'animal. Toutefois, comme l'étiquette 1 est formée de deux parties réunies l'une à l'autre à travers l'oreille de l'animal, il est néanmoins possible et souvent tentant pour l'exploitant de transplanter cette étiquette d'un animal malade sur un animal bien portant ou inversement pour des raisons d'abattage ou de primes.

La figure 2 montre une étiquette qui dans son principe correspond à l'étiquette 1 de la figure 2 mais dont la réalisation est conforme à l'invention.

Selon la figure 2, l'étiquette d'identification de l'invention se compose d'une partie principale 10 et d'une partie auxiliaire 11. Ces deux parties sont réunies l'une à l'autre par l'intermédiaire d'un premier et d'un deuxième organe de fixation 12, 13 en venant emprisonner une partie de l'animal. Dans le cas le plus simple évoqué ci-dessus, ces deux parties 10, 11 sont placées de part et d'autre de l'oreille de l'animal et les pièces à réunir sont introduites et serties l'une dans l'autre.

Dans le cas d'un collier, les organes de fixation 12, 13 sont prévus aux deux extrémités du collier que l'on réunit autour du cou de l'animal.

Dans les deux cas, le principe de l'invention est le même.

La partie principale 10 comporte un microprocesseur 14 relié par une double ligne 15 formant par exemple une boucle électrique à un moyen de liaison 16 représenté schématiquement sous la forme d'un interrupteur et qui est placé dans le fond ou sur les côtés du premier organe de fixation 12 ; cet organe de fixation 12 est en forme d'entonnoir ou pièce femelle pour recevoir la partie en saillie de l'organe de fixation 13 appartenant à la partie auxiliaire 11. Cet organe de fixation 13 est muni à son extrémité ou sur les côtés d'un moyen de liaison 17 qui, coopérant avec le moyen de liaison 16, assure la fermeture du circuit 15 lorsque l'organe 17 est suffisamment proche de l'organe interrupteur 16 pour que l'on puisse considérer que la partie auxiliaire et la partie principale 11, 10 sont réunies et solidarisées.

Selon un mode de réalisation avantageux, la partie 10 comporte le microprocesseur 14 et l'autre partie 11 reçoit la source d'alimentation électrique telle qu'une pile ou une batterie. La liaison entre les deux parties du circuit électronique s'établit lors de la réunion du premier et du second organe de fixation 12, 13. En cas de rupture de l'étiquette d'identification cela se traduit par une coupure de l'alimentation qui laisse une trace dans le microprocesseur même si l'alimentation est rétablie.

En cas de séparation ou de tentative de séparation de la partie auxiliaire 11 par rapport à la partie principale 10, cela se traduit par un éloignement plus ou moins important de l'organe 17 par rapport à l'organe 16 ce qui provoque l'ouverture de l'organe 16 et la transmission d'une information non effaçable au microprocesseur 14. Une tentative de falsification de l'étiquette d'identification est alors inscrite dans ce microprocesseur 14.

Le microprocesseur 14 est également relié à un périphérique émetteur-récepteur 18 qui permet de lire ou d'inscrire dans le microprocesseur 14 des informations concernant l'utilisation qui a été faite de l'étiquette ou encore des informations relatives à l'animal ou aux modifications apportées à l'animal (vaccinations, état de santé, etc...).

Enfin, les parties principale et auxiliaire 10, 11 peuvent comporter une surface d'affichage 20, 20' qui reçoit des informations écrites en clair ou de manière codée mais lisibles indépendamment du microprocesseur 14.

La figure 3 montre un mode de réalisation du principe général de l'invention illustré à la figure 2. Selon la figure 3, on a une partie principale 30 d'étiquette et une partie auxiliaire 31. La partie principale et la partie auxiliaire 30, 31 se terminent à leur extrémité gauche par un organe de fixation 32, 33 destiné à coopérer l'un avec l'autre. L'interrupteur de l'exemple général ci-dessus est constitué dans ce cas par deux plots 34 reliés à une ligne électrique 35 appartenant au microprocesseur 36. La pièce auxiliaire 31 comporte comme organe de fixation 33 une tige de sertissage 37, métallique, qui assure la jonction électrique entre les deux plots 34 lorsque le sertissage ou la mise en place est faite. Cette fermeture transmet un signal au microprocesseur 36. Inversement, toute tentative de désolidarisation des parties 30, 31 l'une par rapport à l'autre quelle que soit la raison de cette désolidarisation est inscrite dans le microprocesseur 36 de manière non volatile.

Il convient également de remarquer que les parties principale 30 et auxiliaire 31 de l'étiquette comportent des perforations 38, 39 pour la mise en place de la pince à sertir.

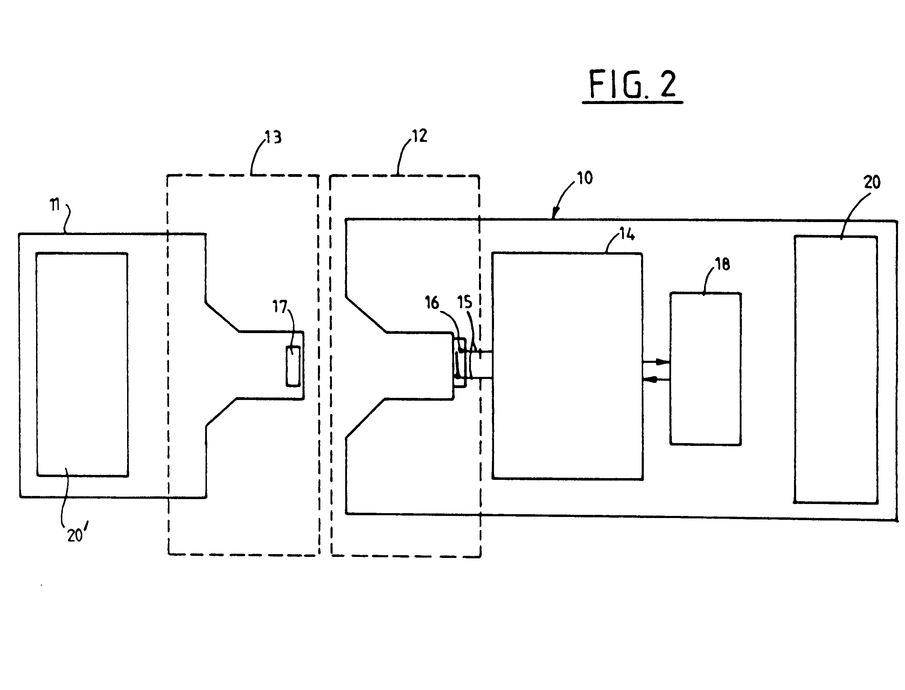

Les figures 4 et 5 montrent des vues de face de la partie auxiliaire (figure 4) et la partie principale (figure 5) de l'étiquette. Extérieurement, ces deux parties 50, 51 comportent un code lisible 52, un code barre 53 et des organes de fixation 54, 55 non détaillés. La partie principale 30 montre également par transparence le microprocesseur 55 occupant l'une ou l'autre des deux positions représentées. Cette figure montre également les conducteurs 56 reliés à l'organe de fixation 54 pour fermer le contact lors de la réunion des deux parties principale 50 et auxiliaire 51.

Les remarques faites ci-dessus dans le cadre de l'exposé général de l'invention selon la figure 2 s'appliquent également dans l'exemple de réalisation représenté aux figures 3, 4, 5.

Enfin, suivant une variante non représentée, le circuit électronique se trouve sur l'une des parties et l'antenne sur l'autre, si bien qu'en cas de rupture, l'émission radio ne peut plus se faire.

## Revendications

**1°)** Etiquette d'identification d'un animal notamment d'un bovin,
– étiquette utilisée comme moyen d'identification infalsifiable et de support actif d'informations,
– cette étiquette étant formée de deux parties fixées l'une à l'autre par des organes de fixation respectifs, ces deux parties enserrant entre elles, au moment de la mise en place sur l'animal, une partie de cet animal (oreille ou cou),
étiquette d'identification caractérisée par :
– une partie principale (10) munie d'un microprocesseur (14) pour l'enregistrement et la lecture d'informations concernant l'animal et d'un premier organe de fixation (12),
– une partie auxiliaire (11) munie d'un second organe de fixation (13) destiné à être relié au premier organe de fixation (12) de la partie principale (10) par une liaison lors de la mise en place de la partie principale (10) et de la partie auxiliaire (11) sur l'animal,
– la réunion des deux organes de fixation (12, 13) mettant en oeuvre le microprocesseur (14) et toute nouvelle ouverture ou tentative de rupture de cette liaison provoquant l'inscription d'une information non effaçable dans le microprocesseur (14).

**2°)** Etiquette d'identification animal selon la revendication 1, caractérisée en ce que les organes de fixation (12, 13) de la partie principale (10) et de la partie auxiliaire (11) sont des organes d'assemblage par emboîtage et sertissage.

**3°)** Etiquette d'identification selon l'une quelconque des revendications 1 et 2, caractérisée en ce que le moyen de liaison formé lors de la réunion du premier et du second organe de fixation (12, 13) réalise un contact électrique (16, 17) au moment de la réunion des organes de fixation (12, 13).

**4°)** Etiquette d'identification selon la revendication 3, caractérisée en ce que le moyen de liaison réalise la fermeture d'un circuit électrique.

**5°)** Etiquette d'identification selon la revendication 1, caractérisée en ce que le microprocesseur (14) est relié à un élément périphérique émetteur-récepteur lui aussi intégré à la partie principale (10) de l'étiquette.

**6°)** Etiquette d'identification selon les revendications 1 à 5, caractérisée en ce que l'une des parties (10) comporte le microprocesseur (14) et l'autre partie (11) reçoit la source d'alimentation électrique et/ou l'antenne, la liaison s'établissant par la fermeture des contacts lors de la réunion du premier et du second organe de fixation (12, 13).

FIG.1

FIG.3

FIG.4

FIG.5

FIG. 2

EP 0 486 377 A1

**Office européen des brevets**

**RAPPORT DE RECHERCHE EUROPEENNE**

Numero de la demande

EP   91 40 3022

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-0 077 707 (SOCIETE NOUVELLE ROCKALL)<br>* page 3, ligne 3 - ligne 21 *<br>* page 4, ligne 6 - ligne 32 *<br>* page 5, ligne 8 - ligne 14; figure 1 *<br>--- | 1,5 | A01K11/00<br>G09F3/12 |
| A | US-A-4 958 452 (TATE)<br>* colonne 3, ligne 23 - colonne 4, ligne 4 *<br>* colonne 4, ligne 30 - ligne 48; figures 1-4 *<br><br>----- | 1,2 | |

**DOMAINES TECHNIQUES RECHERCHES (Int. Cl.5 )**

G09F
A01K

Le présent rapport a été établi pour toutes les revendications

| Lieu de la recherche | Date d'achèvement de la recherche | Examinateur |
|---|---|---|
| LA HAYE | 24 JANVIER 1992 | POTTIEZ M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)